# EUROPEAN PATENT APPLICATION

(11) **EP 4 489 223 A1**
(43) Date of publication of application: **08.01.2025**
(21) Application number: 22928428.6
(22) Date of filing: 21.12.2022
(51) Int. Cl.: H01Q 3/02

(54) **TRANSMISSION APPARATUS FOR ANTENNA**

(30) Priority: 28.02.2022 CN 202210185881
(71) Applicant: PROSE TECHNOLOGIES (SUZHOU) CO., LTD., Suzhou, Jiangsu 215345 (CN)
(72) Inventor: HUANGFU, Youfang, Suzhou, Jiangsu 215345 (CN); BAO, Suyang, Suzhou, Jiangsu 215345 (CN); HUANG, Junyang, Suzhou, Jiangsu 215345 (CN); LI, Yongzhong, Suzhou, Jiangsu 215345 (CN)
(74) Representative: Isarpatent
(86) International application number: PCT/CN2022/140547
(87) International publication number: WO 2023/160180

(57) **Abstract**

The present disclosure provides a transmission apparatus applied to an antenna, including a first rotation member, a cross shaft, a second rotation member. The first end of the first rotation member is connected to a first linkage structure, and the second end of the first rotation member includes a pair of first pivot elements. The cross shaft includes a pair of first pivot mating elements and a pair of second pivot mating elements. Each first pivot mating element and a neighboring second pivot mating element are formed at an angle. The pair of first pivot mating elements rotatably cooperate with the pair of first pivot elements. The first end of the second rotation member is connected to the second linkage structure. The second end of the second rotation member includes a pair of second pivot elements. The pair of second pivot elements rotatably cooperate with the pair of second pivot mating elements. The transmission apparatus for the antenna of the present disclosure can realize transmission with momentum direction change. When the distance between the power input shaft and the power output shaft changes, the transmission with momentum direction change can be realized through the flexible arrangement of the transmission apparatus.

## Description

### TECHNICAL FIELD

The present disclosure generally relates to the communication technology field and, more particularly, to a transmission apparatus for an antenna.

### BACKGROUND

There are many base stations provided in a mobile communication system. Each base station includes one or more base station antennas. A base station antenna includes a plurality of radiation units (also called antenna units). Due to the requirement of the coverage or optimization of the mobile communication networks, a pitch orientation of an antenna wave beam generated by the base station antenna should be adjustable (e.g., realized by a phase shifter in the base station antenna). The antenna phase shifter can be configured to adjust the phase of a component of a radio frequency (RF) signal that is transmitted or received through the antenna unit array. By changing a phase distribution of the component of the RF signal that is transmitted or received by the antenna units of the array antenna, a downward tilt angle of the antenna beam can be adjusted.

In the existing base station antenna, a transmission apparatus applied to the antenna phase shifter is an important member, which is very important for the structure and reliability of the product. In product cost, the cost of the transmission apparatus takes a considerable ratio.

The existing transmission apparatus usually has a retractable universal joint structure. Limited by the structural design of the universal joint, the existing transmission apparatus cannot satisfy momentum transmission with a large change in direction and input/output distance. In addition, the existing transmission apparatus using the universal joint has a complex structure and high cost in material, mold, and processing. Therefore, a new type of transmission apparatus is needed to overcome the above disadvantages to improve the performance of the antenna and reduce the manufacturing cost of the antenna.

### SUMMARY

For the above problem, the present disclosure provides a transmission apparatus for an antenna. The transmission apparatus includes:
a first rotation member, a first end of the first rotation member being connected to a first linkage structure, and a second end of the first rotation member including a pair of first pivot elements;
a cross shaft including a pair of first pivot mating elements and a pair of second pivot mating elements, each first pivot mating element of the first pivot mating elements and a neighboring pivot mating element being arranged at an angle, and the pair of first pivot mating elements rotatably cooperating with the pair of first pivot elements; and
a second rotation member, a first end of the second rotation member being connected to a second linkage structure, a second end of the second rotation member including a pair of second pivot elements, and the pair of second pivot elements rotatably cooperating with the pair of second pivot mating elements.

In one embodiment of the present disclosure, the first rotation member and/or the second rotation member include a position-limiting mating element, and the position-limiting mating element is configured to cooperate with an external position-limiting element to limit a movement of the first rotation member and/or the second rotation member.

In one embodiment of the present disclosure, the position-limiting mating element is arranged at the first end of the first rotation member and/or the first end of the second rotation member;
when the position-limiting mating element is arranged at the first end of the first rotation member, a hook is arranged on a side of the position-limiting mating element away from the first end of the first rotation member, and the position-limiting mating element cooperates with the external position-limiting element through the hook to limit the movement of the first rotation member; and
when the position-limiting mating element is arranged at the first end of the second rotation member, a hook is arranged on a side of the position-limiting mating element away from the first end of the second rotation member, and the position-limiting mating element cooperates with the external position-limiting element to limit the movement of the second rotation member.

In one embodiment of the present disclosure, the position-limiting mating element is a recess formed between the first end and the second end of the first rotation member, and/or between the first end and the second end of the second rotation member.

In one embodiment of the present disclosure, one or more of the pair of first pivot elements and the pair of second pivot elements are protrusions, and the first pivot mating elements and the second pivot mating elements matching the protrusions include grooves.

In one embodiment of the present disclosure, one or more of the pair of first pivot mating elements and the pair of second pivot mating elements are protrusions, and the first pivot elements or the second pivot elements matching the protrusions have grooves or mounting holes.

In one embodiment of the present disclosure, the second end of the first rotation member includes a pair of first elastic arms, each of the first elastic arms includes one of the first pivot elements, at least one of the pair of first elastic arms and the pair of first pivot mating elements of the cross shaft include a first guide structure, a length of the first elastic arm depends on a height of the protrusion, and the pair of first pivot mating elements cooperate with corresponding first pivot elements through the first guide structure; and
the first end of the first rotation member includes a first connection mating element configured to connect the first linkage structure.

In one embodiment of the present disclosure, the second end of the second rotation member includes a pair of second elastic arms, each of the second elastic arms includes one of the second pivot elements, at least one of the pair of second elastic arms and the pair of second pivot mating elements of the cross shaft includes a second guide structure, a length of the second elastic arm depends on a height of the protrusion, and the pair of second pivot mating elements cooperate with the corresponding second pivot elements through the second guide structure;
the first end of the second rotation member includes a second connection mating element configured to connect the second linkage structure; and
the lengths of the first elastic arms and the second elastic arms range from 2mm to 20mm.

In one embodiment of the present disclosure, the first rotation member includes a pair of symmetrically arranged first rotation sub-members; and
one first rotation sub-member of the pair of first rotation sub-members includes a first lock element at a first end of the first rotation sub-member, the other first rotation sub-member of the pair of first rotation sub-members includes a first mating lock element cooperating with the first lock element at a first end of the other first rotation sub-member, and the pair of first rotation sub-members are fixed together through the first lock element and the first mating lock element.

In one embodiment of the present disclosure, the second rotation member includes a pair of symmetrically arranged second rotation sub-members; and
one second rotation sub-member of the pair of second rotation sub-members includes a second lock element at a first end of the second rotation sub-member, and the other rotation sub-member of the pair of second rotation sub-members includes a second mating lock element cooperating with the first lock element at a first end of the other second rotation sub-member, and the pair of second rotation sub-members are fixed together through the second lock element and the second mating lock element.

In one embodiment of the present disclosure, the first rotation member includes a pair of symmetrically arranged first rotation sub-members;
one first rotation sub-member of the pair of first rotation sub-members includes a thermal melt element at a first end of the first rotation sub-member, the other first rotation sub-member of the pair of first rotation sub-members includes a first groove cooperating with the first melt element; and
the first melt element and the first groove are melted and fixed to mate and fix the pair of first rotation sub-members.

In one embodiment of the present disclosure, two first melt elements that are not parallel to each other are arranged at the first end of the first rotation sub-member of the pair of first rotation sub-members, two first grooves are provided at the first end of the other first rotation sub-member of the pair of first rotation sub-members, and each first groove respectively cooperates with a corresponding first thermal melt element.

In one embodiment of the present disclosure, the second rotation member includes a pair of symmetrically arranged second rotation sub-members;
a second thermal melt element is arranged at the first end of the second rotation sub-member of the pair of second rotation sub-members, and a second groove matching the second thermal melt element is arranged at the first end of the other second rotation sub-member of the pair of second rotation sub-member; and
the second thermal melt element and the second groove are melted and fixed to mate and fix the pair of second rotation sub-members.

In one embodiment of the present disclosure, the two second thermal melt elements that are not in parallel to each other are arranged at the first end of the second rotation sub-member of the pair of second rotation sub-members, the two second grooves are arranged at the first end of the other second rotation sub-member of the pair of second rotation sub-members, each second groove respectively cooperates with a corresponding second thermal melt element.

In one embodiment of the present disclosure, a height of the protrusion ranges from 0.3mm to 5mm.

The transmission apparatus applied to the antenna of the present disclosure can realize the transmission with momentum speed change. The transmission apparatus applied to the antenna of the present disclosure can also include a various flexible positioning and installation methods, which reduce the design difficulty of the antenna and shorten the processing and assemble time. Moreover, when distances between the rotation shaft of the phase shifter and the input transmission shaft of the motor in the height direction and the width direction are different, the length of the linkage structure at the middle can be adjusted to adapt to the actual needs.

### BRIEF DESCRIPTION OF THE DRAWINGS

The features, advantages, and other aspects of embodiments of the present disclosure become obvious in connection with the accompanying drawings and detailed description below. Some embodiments of the present disclosure are shown exemplarily and non-limiting here.
FIGs. 1a to 1h are schematic diagrams of a transmission apparatus applied to an antenna according to embodiment 1 of the present disclosure.
FIGs. 2a and 2b are schematic diagrams of a transmission apparatus applied to an antenna according to embodiment 2 of the present disclosure.
FIGs. 3a and 3b are schematic diagrams of a transmission apparatus applied to an antenna according to embodiment 3 of the present disclosure.
FIGs. 4a and 4b are schematic diagrams of a transmission apparatus applied to an antenna according to embodiment 4 of the present disclosure.
FIGs. 5a to 5c are schematic diagrams of a transmission apparatus applied to an antenna according to some embodiments of the present disclosure.

### DETAILED DESCRIPTION OF THE EMBODIMENTS

Embodiments of the present disclosure are described in connection with the accompanying drawings that form a part of the present disclosure. The accompanying drawings illustrate some embodiments of the present disclosure by examples. Exemplary embodiments are not intended to exhaustively represent all embodiments of the present disclosure. Other embodiments can be used, and structural or logical modifications can be made without departing from the scope of the present disclosure. Thus, the following description below is not restrictive, and the scope of the present disclosure is defined by the appended claims.

In the present disclosure, "include," "comprise," and similar terms should be understood as open terms, i.e., "including but not limited to", indicating that other contents can be included. The term "based on" is "at least partially based on". The term "an embodiment" indicates "at least one embodiment". The term "another embodiment" indicates "at least one additional embodiment".

The technical problem to be solved by the present disclosure is how to improve a transmission apparatus of an antenna to cause the transmission apparatus to be flexibly applied to various types of antennas to realize precise transmission of the momentum and reduce the complexity of the design and installation of the transmission apparatus.

To solve the technical problem, the transmission apparatus of the present disclosure can include a first rotation member, a cross shaft, and a second rotation member. The first rotation member can be connected to a first linkage structure and include a pair of first pivot elements at a second end of the first rotation member. The cross shaft can include a pair of first pivot mating elements and a pair of second pivot mating elements. The pair of first pivot mating elements can rotatably cooperate with the pair of first pivot elements. The second rotation member can be connected to a second linkage structure and include a pair of second pivot elements at a second end of the second rotation member. The pair of pivot elements can rotatably cooperate with the pair of second pivot mating elements. The transmission apparatus applied to the antenna of the present disclosure can be configured to realize transmission of momentum with direction change. Moreover, when a distance between a momentum input shaft and a momentum output shaft changes, the transmission of momentum with direction change can be realized by flexibly arranging the transmission apparatus.

### Embodiment 1

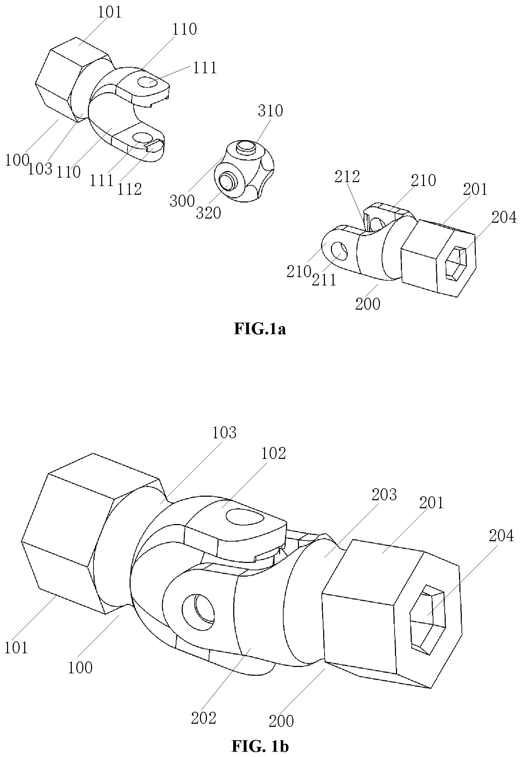

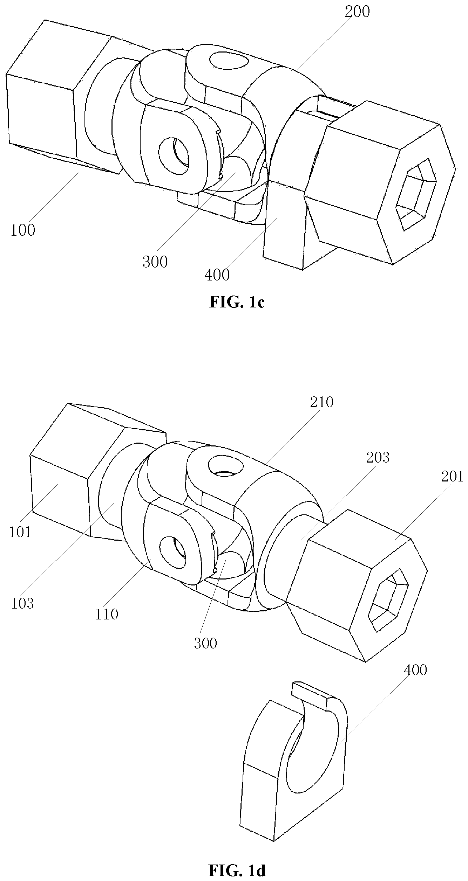

FIGs. 1a to 1h are schematic diagrams of a transmission apparatus applied to an antenna according to an embodiment of the present disclosure. In some embodiments, the transmission apparatus for the antenna includes a first rotation member 100, a cross shaft 300, and a second rotation member 200. The first end 101 of the first rotation member 100 is connected to the first linkage structure, and a pair of first pivot elements 111 is arranged at the second end 102 of the first rotation member 100. The cross shaft 300 includes a pair of symmetrically arranged first pivot mating elements 310 and a pair of symmetrically arranged second pivot mating elements 320. The first end 201 of the second rotation member 200 is connected to the second linkage structure, and a pair of second pivot elements 211 are arranged at the second end 202 of the second rotation member 200. In some embodiments, each first pivot mating element 310 of the cross shaft 300 is arranged with a neighboring second pivot mating element 320 at an angle. Moreover, the pair of first pivot mating elements 310 can rotatably cooperate with the pair of first pivot elements 111. The pair of second pivot mating elements 320 can rotatably cooperate with the pair of second pivot elements 211.

As shown in FIGs. 1a and 1b, the second end 102 of the first rotation member 100 includes a pair of first elastic arms 110. Each first elastic arm 110 includes a first pivot element 111. At least one of the pair of first elastic arms 110 can include a first guide structure 112. Thus, the pair of first pivot mating elements 310 of the cross shaft 300 can cooperate with the corresponding first pivot elements 111 with the help of the first guide structure 112. Meanwhile, a first connection mating element configured to connect the first linkage structure can be arranged at the first end 101 of the first rotation member 100. The first connection mating element can include a hole or groove.

In practical applications, a first guide structure 112 can be designed for each first elastic arm 110. Thus, the pair of first pivot mating elements 310 of the cross shaft 300 can cooperate with the pair of first pivot elements 110 with the help of the corresponding first guide structures 112, respectively.

Additionally, in some embodiments, a first guide structure can be designed at one or two of the pair of first pivot mating elements 310of the cross shaft 300 to facilitate the cooperation between the cross shaft 300 and the pair of first pivot elements 111.

In addition, in the present embodiment, a pair of second elastic arms 210 is arranged at the second end of the second rotation member 200. Each second elastic arm 210 includes a second pivot element 211. A second guide structure 212 can be arranged at at least one of the pair of second elastic arms 210. Thus, the pair of second pivot mating elements 320 of the cross shaft 300 can cooperate with the corresponding second pivot elements 211 with the help of the second guide structure 212. Meanwhile, a second connection mating element 204 (the second connection mating element 204 can include a hole or a groove) configured to connect the second linkage structure can be arranged at the first end of the second rotation member 200.

Similarly, a second guide structure can be designed at one or two of the pair of second pivot mating elements 320 of the cross shaft 300 to facilitate the cooperation between the cross shaft 300 and the pair of second pivot elements 211. In some other embodiments, a second guide structure 212 can be designed for each of the second elastic arms 210 to facilitate the cooperation between the cross shaft 300 and the pair of second pivot elements 211.

As shown in FIGs. 1b to 1d, the first end 101 and second end 102 of the first rotation member 100 form a first recess 103. The first recess 103 can be configured to cooperate with an external position-limiting element 400 to limit the movement of the first rotation member 100.

Alternatively, the first end 201 and second end 202 of the second rotation member 200 can form a second recess 203. The second recess 203 can be configured to cooperate with the external position-limiting element 400 to limit the movement of the second rotation member 200.

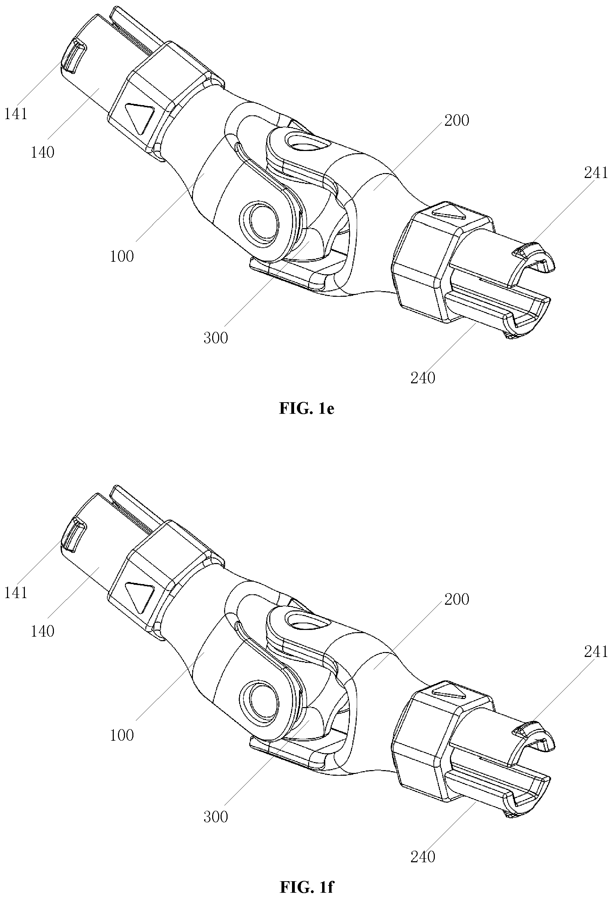

Additionally, as shown in FIGs. 1e and 1f, a position-limiting mating element 140 is arranged at the first end 101 of the first rotation member 100. The position-limiting mating element 140 includes a hook 141 at a side of the position mating element 140 away from the first end of the first rotation member 100. In some embodiments, the position-limiting mating element 140 can cooperate with the external position-limiting element 400 through the hook 141 to limit the movement of the first rotation member 100.

Alternatively, a position-limiting mating element can be arranged at the first end of the second rotation member 200. The position-limiting mating element can include a hook 241 at a side of the position-limiting mating element away from the first end 201 of the second rotation member 200. In some embodiments, the position-limiting mating element can cooperate with the external position-limiting element 400 through the hook 241 to limit the movement of the second rotation member 200.

In practical applications, the position-limiting mating element can be arranged at each of the first end of the first rotation member 100 and the first end of the second rotation member 200, or the position-limiting mating element can be arranged at the first rotation member 100 or the second rotation member 200.

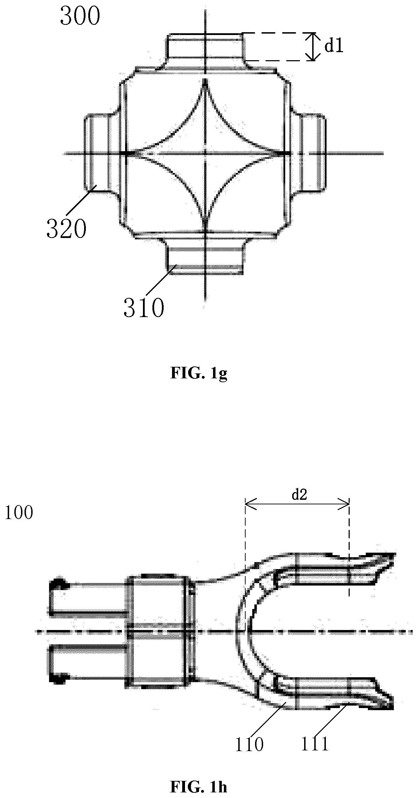

As shown in FIG. 1a, FIG. 1g, and FIG. 1h, in some embodiments, the first pivot mating elements 310 and the second pivot mating elements 320 are protrusions. The first pivot elements 111 matching the first pivot mating elements 310 and the second pivot elements 211 matching the second pivot mating elements 320 have grooves or holes.

In the present embodiment, length d2 of the first elastic arm 110 of the first rotation member 100 can depend on height d1 of the protrusion. The length of the second elastic arm 210 of the second rotation member 200 can also depend on height d1 of the protrusion. The height of the protrusion can refer to the height of the protrusion entering the corresponding groove.

In the present embodiment, the height of the protrusion can range from 0.3 mm to 5 mm. The length of the first elastic arm 110 and the second elastic arm 210 can range from 2 mm to 20 mm.

When the momentum output of the momentum output apparatus (e.g., motor) of the antenna is not coaxial with the momentum input of the antenna phase shifter, the transmission apparatus of embodiments of the present disclosure can be configured to change the momentum direction.

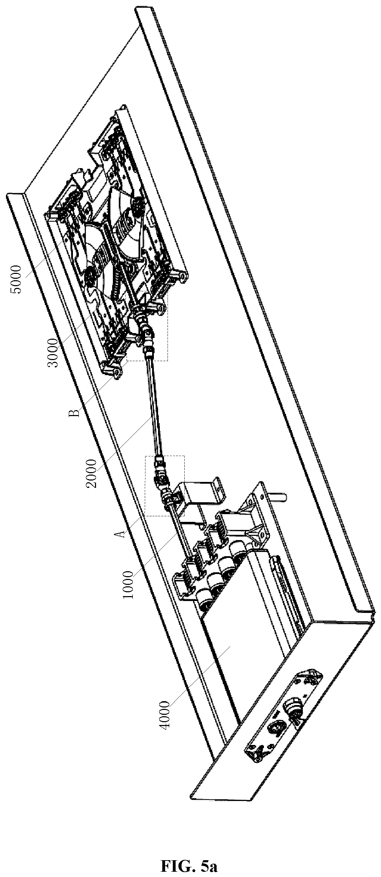

FIGs. 5a to 5c are application scenes of a transmission apparatus applied to an antenna according to some embodiments of the present disclosure. Since a drive apparatus (e.g., a motor 4000) is not coaxial with a to-be-driven phase shifting apparatus 5000, two transmission apparatuses may be needed to change the drive force (or power) to allow the motor 4000 to drive the phase shifting apparatus 5000. The momentum transmission direction can be changed with the arrangement of the first transmission apparatus and the second transmission apparatus. In some embodiments, the motor 4000 can drive the first linkage structure 1000 connected to the first transmission apparatus to rotate. The first transmission apparatus can drive the second linkage structure 2000 connected to the first transmission apparatus to rotate to further cause the second transmission apparatus to drive a third linkage structure 3000 to rotate. Thus, the third linkage structure 3000 can drive the phase shifting apparatus 5000 to operate.

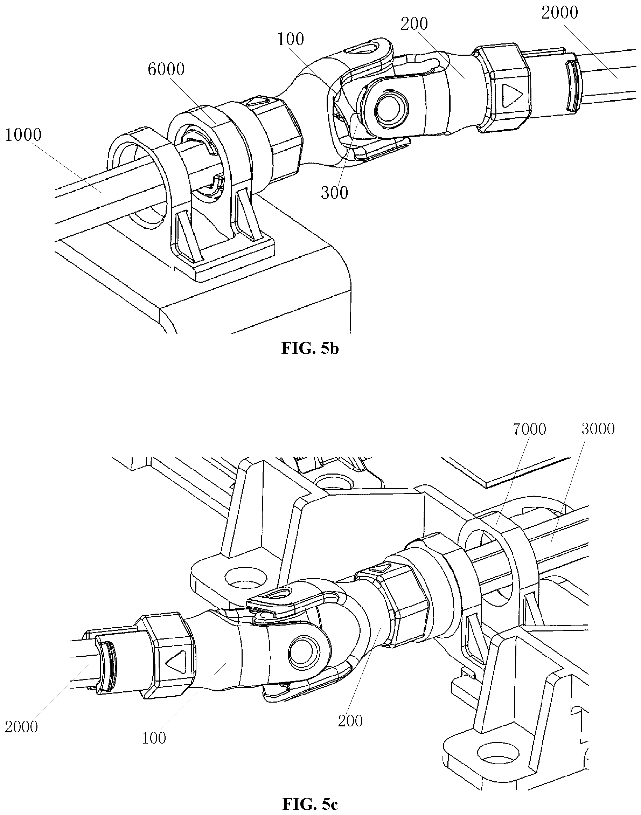

In particular, FIG. 5b is an enlarged view of section A in FIG. 5a and shows that one end of the first linkage structure 1000 is fixed in the first connection mating element (e.g., a connection hole) of the first rotation member 100 of the first transmission apparatus, one end of the second linkage structure 2000 is fixed in the second connection mating element (e.g., a connection hole) of the second rotation member 200 of the first transmission apparatus, and the position-limiting mating element of the first rotation member 100 of the first transmission apparatus is fixed in the first external position-limiting element 6000. The first linkage structure 1000 is connected to the second linkage structure non-coaxially through the first transmission apparatus.

In particular, FIG. 5c is an enlarged view of section B in FIG. 5a and shows that the other end of the second linkage structure 2000 is fixed at the first connection mating element (e.g., a connection hole) of the first rotation member 100 of the second transmission apparatus, one end of the third linkage structure 3000 is fixed at the second connection mating element (e.g., a connection hole) of the second rotation member 200 of the second transmission apparatus, and the position-limiting mating element of the second rotation member 200 of the second transmission apparatus is fixed at the second external position-limiting element 7000. The second linkage structure 2000 can be connected to the third linkage structure 3000 non-coaxially through the second transmission apparatus.

In practical applications, due to the characteristics of the cross shaft, the relative position of the motor 4000 and the antenna phase shifter 5000 can be non-coaxial, and the motor 4000 and the antenna phase shifter 5000 may be at different horizontal surfaces. Thus, one or a plurality of transmission apparatuses can be provided to change the direction of the drive force multiple times to improve the application range of the transmission apparatus.

### Embodiment 2

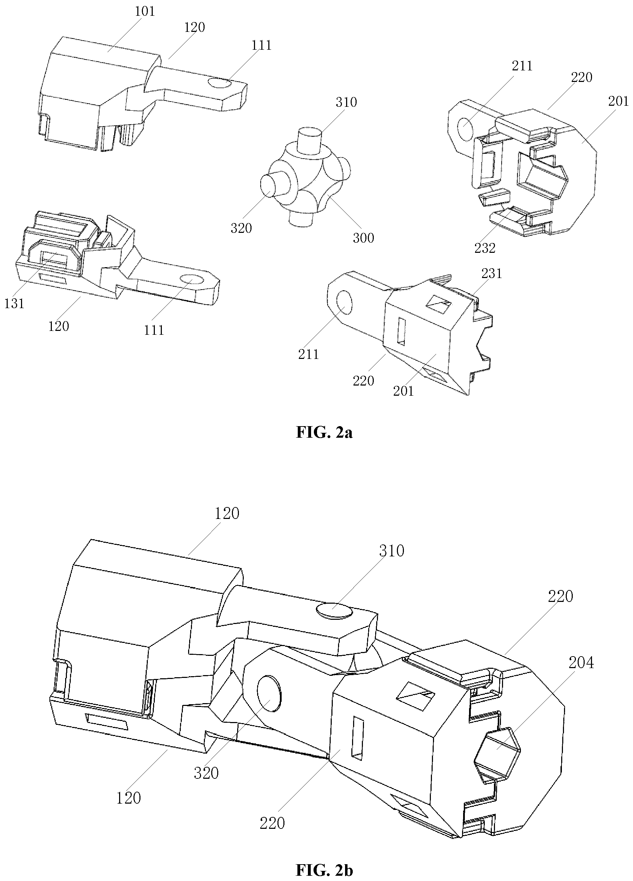

As shown in FIG. 2a and 2b, the transmission apparatus applied to the antenna of embodiments of the present disclosure includes a first rotation member 100, a cross shaft 300, and a second rotation member 200. The structure of the cross shaft 300 is similar to the structure of the cross shaft 300 of embodiment 1, which is not repeated here.

In some embodiments, the first rotation member 100 includes a pair of symmetrically arranged first rotation sub-members 120. A first lock element (not shown in the figure) can be arranged at the first end 101 of a first rotation sub-member 120 of the first pair of first rotation sub-members. A first mating lock element 131 cooperating with the first lock element is arranged at the first end of the other first rotation sub-member 120. In practical applications, the pair of first rotation sub-members 120 can cooperate with the first mating lock element 131 through the first lock element to be fixed together.

In the present embodiment, the second rotation member 200 includes a pair of symmetrically arranged second rotation sub-members 220. A second lock element 232 is arranged at the second end 201 of one second rotation sub-member 220 of the pair of second rotation sub-members 220. A second mating lock element 231 cooperating with the second lock element 232 is arranged a the second end 201 of the other second rotation sub-member 220. The pair of second rotation sub-members can cooperate with the second mating lock element 231 through the second lock element 232 to be fixed together.

In addition, in some embodiments, one or a plurality of first lock elements and first mating lock elements can be arranged at the first rotation sub-member. One or a plurality of first lock elements and first mating lock elements can be arranged at the other first rotation sub-member. Thus, the two first rotation sub-members can be fixed together through the cooperations between the plurality of first lock elements and the first mating lock elements. The similar design can be suitable for the second rotation sub-members, which is not repeated here.

Alternatively, similar to FIG. 1b and FIG. 1d of embodiment 1, a first recess 103 is formed between the first end and the second end of the first rotation member 100. The first recess 103 can be configured to cooperate with the external position-limiting element to limit the movement of the first rotation member 100. Meanwhile, a second recess 203 is formed between the first end and the second end of the second rotation member 200. The second recess 203 can be configured to cooperate with the external position-limiting element to limit the movement of the second rotation member 200.

Further, similar to FIG. 1e and FIG. 1f of embodiment 1, a position-limiting mating element is arranged at the first end of the first rotation member 100. The position-limiting mating element includes a hook on a side of the position-limiting mating element away from the first end of the first rotation member 100. In some embodiments, the position-limiting mating element can be configured to cooperate with the external position-limiting element through the hook to limit the movement of the first rotation member 100. The similar structure can be also arranged at the first end of the second rotation member 200.

In addition, similar to embodiment 1, one or more of the pair of first pivot mating elements 310 and the pair of second pivot mating elements 320 of the cross shaft 300 can be protrusions. The first pivot element 111 matching the first pivot mating element 310 and the second pivot element 211 matching the second pivot mating element 320 can include grooves or holes.

In the present embodiments, the height of the protrusion can range from 0.3 mm to 5 mm, and the length of the first elastic arm 110 and the second elastic arm 210 can range from 2 mm to 20 mm.

In the transmission apparatus of embodiments of the present disclosure, after the pair of first rotation sub-members cooperate with the cross shaft, the first rotation member can cooperate with the cross shaft through the cooperation between the first lock element and the first mating lock element. Moreover, after the pair of second rotation sub-members cooperate with the cross shaft, the second rotation member can cooperate with the cross shaft through the cooperation between the second lock element and the second mating lock element.

The transmission apparatus of embodiments of the present disclosure can be assembled simply, applied flexibly, suitable for various types of antennas.

### Embodiment 3

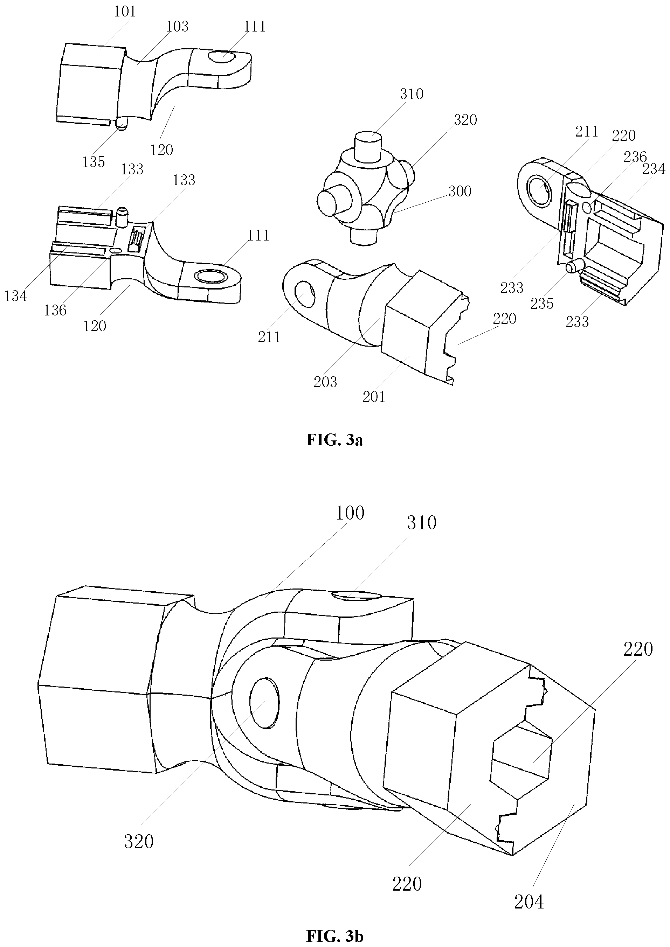

As shown in FIG. 3a and FIG. 3b, the transmission apparatus applied to the antenna of embodiments of the present disclosure includes a first rotation member 100, a cross shaft 300, and a second rotation member 200. The structure of the cross shaft 300 is similar to the structure of the cross shaft 300 of embodiment 1, which is not repeated here.

In the present embodiment, the first rotation member 100 includes a pair of symmetrically arranged first rotation sub-members 120. A first thermal melt element 133 is arranged at the first end of one first rotation sub-member 120 of the pair of first rotation sub-members 120. A first groove (not shown in the figure) cooperating with the first thermal melt element 133 is arranged at the first end 101 of the other first rotation sub-member 120. In practical applications, the first thermal melt element 133 can be fixed to the first groove through melting to mate and fix the pair of first rotation sub-members 120.

In addition, the second rotation member 200 includes a pair of symmetrically arranged second rotation sub-members 220. A second thermal melt element 233 is arranged at the first end of one second rotation sub-member 220 of the pair of second rotation sub-members 220. A second groove (not shown in the figure) cooperating with the second thermal melt element 233 is arranged at the first end of the other second rotation sub-member 220. In practical applications, the second thermal melt element 233 and the second groove can be fixed through melting to mate and fix the pair of second rotation sub-members.

In addition, in practical applications, one or more first thermal melt elements 133 and first grooves 134 can be arranged at one first rotation sub-member 120. One or more first thermal melt elements 133 and first grooves 134 can be arranged at the other first rotation sub-member. Thus, the two first rotation sub-members can mate and be fixed together through the plurality of corresponding first thermal melt elements and first grooves 134. The similar design can be suitable to the second rotation sub-members, which is not repeated here.

In addition, in some embodiments, a mounting element 135 and/or a mounting hole 136 can be arranged at the first end 101 of one first rotation sub-member 120 of the pair of first rotation sub-members 120. Mounting holes 136 matching the mounting elements 135 and/or mounting elements 135 matching the mounting holes 136 can be arranged at the first end 101 of the other first rotation sub-member 120. Mounting elements 235 and/or mounting holes 236 can be arranged at the first end 201 of one second rotation sub-member 220 of the pair of second rotation sub-members 220. Mounting holes 236 matching the mounting elements 235 and/or mounting elements 235 matching the mounting holes 236 can be arranged at the first end 201 of the other second rotation sub-member 220.

In addition, in some embodiments, similar to FIG. 1b to FIG. 1d, a first recess 103 is formed between the first end and the second end of the first rotation member 100. The first recess 103 can be configured to cooperate with the external position-limiting element to limit the movement of the first rotation member 100. Meanwhile, a second recess 203 is formed between the first end and the second end of the second rotation member 200. The second recess 203 can be configured to cooperate with the external position-limiting element to limit the movement of the second rotation member 200.

Alternatively, similar to FIG. 1e and FIG. 1f of embodiment 1, a position-limiting mating element is arranged at the first end of the first rotation member 100. The position-limiting mating element can include a hook on a side of the position-limiting mating element away from the first end of the first rotation member 100. In some embodiments, the position-limiting mating element can cooperate with the external position-limiting element through the hook to limit the movement of the first rotation member 100. The similar structure can be arranged at the first end of the second rotation member 200.

In addition, similar to embodiment 1, one or more of the first pivot mating elements 310 and the second pivot mating elements 320 of the cross shaft 300 can be protrusions. The first pivot elements 111 or the second pivot elements 211 matching the protrusions can include grooves or mounting holes.

In the present embodiment, the height of the protrusions can range from 0.3 mm to 5 mm. The lengths of the first elastic arm 110 and the second elastic arm 210 can range from 2 mm to 20 mm.

In the transmission apparatus of the present embodiment of the present disclosure, after the pair of first rotation sub-members cooperate with the cross shaft, the thermal melt element and the corresponding groove can be melted and fused through a melting technology (e.g., ultrasound melting technology) to form the pair of first rotation sub-members integrally to realize the cooperation between the first rotation member and the cross shaft. Moreover, after the pair of second rotation sub-members cooperate with the cross shaft, the thermal melt element and the corresponding groove can be melted and fused through the melting technology (e.g., ultrasound melting technology) to form the second rotation sub-members integrally to realize the cooperation between the second rotation member and the cross shaft.

The transmission apparatus of embodiments of the present disclosure has simple assembly, good integrity, high strength, and flexible use and is suitable for various types of antennas.

### Embodiment 4

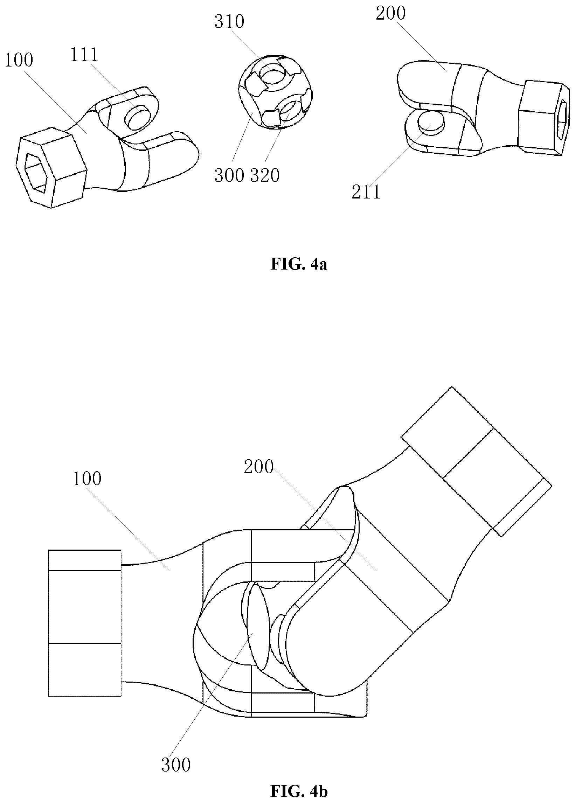

As shown in FIG. 4a and FIG. 4b, a transmission apparatus applied to the antenna is provided. In some embodiments, the first rotation member 100 and the second rotation member 200 can have similar structures as the first rotation member 100 and the second rotation member 200 of embodiment 1. In some embodiments, the first rotation member 100 and the second rotation member 200 can be designed to have similar structures of the first rotation members 100 and the second rotation member 200 of embodiment 2 and embodiment 3.

In the present embodiment, the first pivot elements 111 of the first rotation member 100 and the second pivot elements 211 of the second rotation member 200 can be protrusions. The first pivot mating element 310 matching the first pivot element 111 can have a groove. The second pivot element 320 matching the second pivot element 211 can have a groove.

In practical applications, one or more of the pair of first pivot mating elements 310 and the pair of second pivot mating elements 320 of the cross shaft 300 can be designed to have grooves. Correspondingly, one or more of the pair of first pivot elements 111 and the pair of second pivot elements 211 can be designed as protrusions.

That is to say, the plurality of pivot mating elements of the cross shaft and the pivot elements of the first rotation member and the second rotation member can be designed flexibly to realize the rotatable cooperation of the cross shaft with the first rotation member and the second rotation member.

The above are merely some embodiments of the present disclosure and are not used to limit embodiments of the present disclosure. For those skilled in the art, various modifications and changes can be made to embodiments of the present disclosure. Any modifications, equivalent replacements, and improvements made within the spirit and principle of embodiments of the present disclosure should be within the scope of embodiments of the present disclosure.

Although embodiments of the present disclosure are described with reference to some embodiments. However, embodiments of the present disclosure are not limited to the disclosed embodiments. The disclosed embodiments are intended to encompass various modifications and equivalent arrangements included in the spirit and scope of the appended claims. The scope of the appended claims conforms to the broadest explanation to include the modifications and equivalent structures and functions.

## Claims

1. A transmission apparatus for an antenna, comprising:
a first rotation member, a first end of the first rotation member being connected to a first linkage structure and a second end of the first rotation member including a pair of first pivot elements;
a cross shaft including a pair of first pivot mating elements and a pair of second pivot mating elements, each first pivot mating element of the first pivot mating elements and a neighboring second pivot mating element being arranged at an angle, and the pair of first pivot mating elements rotatably cooperating with the pair of first pivot elements; and
a second rotation member, a first end of the second rotation member being connected to a second linkage structure, a second end of the second rotation member including a pair of second pivot elements, and the pair of second pivot elements rotatably cooperating with the pair of second pivot mating elements.

2. The transmission apparatus for the antenna according to claim 1, wherein the first rotation member and/or the second rotation member includes a position-limiting mating element, and the position-limiting mating element is configured to cooperate with an external position-limiting element to limit a movement of the first rotation member and/or the second rotation member.

3. The transmission apparatus for the antenna according to claim 2, wherein:
the position-limiting mating element is arranged at the first end of the first rotation member and/or the first end of the second rotation member;
when the position-limiting mating element is arranged at the first end of the first rotation member, a hook is arranged on a side of the position-limiting mating element away from the first end of the first rotation member, and the position-limiting mating element cooperates with the external position-limiting element through the hook to limit the movement of the first rotation member; and
when the position-limiting mating element is arranged at the first end of the second rotation member, a hook is arranged on a side of the position-limiting mating element away from the first end of the second rotation member, and the position-limiting mating element cooperates with the external position-limiting element to limit the movement of the second rotation member.

4. The transmission apparatus for the antenna according to claim 2, wherein the position-limiting mating element is a recess formed between the first end and the second end of the first rotation member, and/or between the first end and the second end of the second rotation member.

5. The transmission apparatus for the antenna according to claim 1, wherein one or more of the pair of first pivot elements and the pair of second pivot elements are protrusions, and the first pivot mating elements and the second pivot mating elements matching the protrusions include grooves.

6. The transmission apparatus for the antenna according to claim 1, wherein one or more of the pair of first pivot mating elements and the pair of second pivot mating elements are protrusions, and the first pivot elements or the second pivot elements matching the protrusions have grooves or mounting holes.

7. The transmission apparatus for the antenna according to claim 5 or 6, wherein the second end of the first rotation member includes a pair of first elastic arms, each of the first elastic arms includes one of the first pivot elements, at least one of the pair of first elastic arms and the pair of first pivot mating elements of the cross shaft include a first guide structure, a length of the first elastic arm depends on a height of the protrusion, and the pair of first pivot mating elements cooperate with corresponding first pivot elements through the first guide structure; and
the first end of the first rotation member includes a first connection mating element configured to connect the first linkage structure.

8. The transmission apparatus for the antenna according to claim 7, wherein the second end of the second rotation member includes a pair of second elastic arms, each of the second elastic arms includes one of the second pivot elements, at least one of the pair of second elastic arms and the pair of second pivot mating elements of the cross shaft includes a second guide structure, a length of the second elastic arm depends on a height of the protrusion, and the pair of second pivot mating elements cooperate with the corresponding second pivot elements through the second guide structure;
the first end of the second rotation member includes a second connection mating element configured to connect the second linkage structure; and
the lengths of the first elastic arms and the second elastic arms range from 2mm to 20mm.

9. The transmission apparatus for the antenna according to claim 5 or 6, wherein the first rotation member includes a pair of symmetrically arranged first rotation sub-members; and
one first rotation sub-member of the pair of first rotation sub-members includes a first lock element at a first end of the first rotation sub-member, the other first rotation sub-member of the pair of first rotation sub-members includes a first mating lock element cooperating with the first lock element at a first end of the other first rotation sub-member, and the pair of first rotation sub-members are fixed together through the first lock element and the first mating lock element.

10. The transmission apparatus for the antenna according to claim 9, wherein the second rotation member includes a pair of symmetrically arranged second rotation sub-members; and
one second rotation sub-member of the pair of second rotation sub-members includes a second lock element at a first end of the second rotation sub-member, and the other rotation sub-member of the pair of second ration sub-members includes a second mating lock element cooperating with the first lock element at a first end of the other second rotation sub-member, and the pair of second rotation sub-members are fixed together through the second lock element and the second mating lock element.

11. The transmission apparatus for the antenna according to claim 5 or 6, wherein the first rotation member includes a pair of symmetrically arranged first rotation sub-members;
one first rotation sub-member of the pair of first rotation sub-members includes a thermal melt element at a first end of the first rotation sub-member, the other first rotation sub-member of the pair of first rotation sub-members includes a first groove cooperating with the first melt element; and
the first melt element and the first groove are melted and fixed to mate and fix the pair of first rotation sub-members.

12. The transmission apparatus for the antenna according to claim 11, wherein two first melt elements that are not parallel to each other are arranged at the first end of the first rotation sub-member of the pair of first rotation sub-members, two first grooves are provided at the first end of the other first rotation sub-member of the pair of first rotation sub-members, and each first groove respectively cooperates with a corresponding first thermal melt element.

13. The transmission apparatus for the antenna according to claim 11, wherein the second rotation member includes a pair of symmetrically arranged second rotation sub-members;
a second thermal melt element is arranged at the first end of the second rotation sub-member of the pair of second rotation sub-members, and a second groove matching the second thermal melt element is arranged at the first end of the other second rotation sub-member of the pair of second rotation sub-member; and
the second thermal melt element and the second groove are melted and fixed to mate and fix the pair of second rotation sub-members.

14. The transmission apparatus for the antenna according to claim 13, wherein the two second thermal melt elements that are not in parallel to each other are arranged at the first end of the second rotation sub-member of the pair of second rotation sub-members, the two second grooves are arranged at the first end of the other second rotation sub-member of the pair of second rotation sub-members, each second groove respectively cooperates with a corresponding second thermal melt element.

15. The transmission apparatus for the antenna according to claim 5 or 6, wherein a height of the protrusion ranges from 0.3mm to 5mm.
